# EUROPEAN PATENT SPECIFICATION

(11) **EP 3 310 977 B1**
(45) Date of publication and mention of the grant of the patent: **29.04.2020**
(21) Application number: 16812016.0
(22) Date of filing: 15.06.2016
(51) Int. Cl.: E04F 11/18, F21V 33/00, F21S 4/20

(54) **ELONGATED SUPPORT BOARD**
LÄNGLICHE TRÄGERPLATTE
PANNEAU DE SUPPORT ALLONGÉ

(30) Priority: 16.06.2015 NO 20150786
(43) Date of publication of application: 25.04.2018
(73) Proprietor: Marine Aluminium AS, 4299 Avaldsnes (NO)
(72) Inventor: HUSE, Per, Kjartan, 4633 Kristiansand (NO); FRØKEDAL, Arild, 5554 Valevåg (NO); ROVIK, Kjetil, 4250 Kopervik (NO)
(74) Representative: Håmsø Patentbyrå AS
(86) International application number: PCT/NO2016/050127
(87) International publication number: WO 2016/204624

(56) References cited:
- JP-A- 2002 061 360
- KR-B1- 100 979 675
- US-A- 4 161 769
- US-A- 4 161 769
- US-A- 4 858 087
- US-A- 4 858 087

## Description

This invention deals with an elongated support board. More particularly, it relates to an elongated support board forming a handrail, a knee rail or the like in a railing alongside a walkway,.

The terminology in this document is in line with the terms used in DSB 41.6 (DSB = the Norwegian Directorate for Civil Protection) "Protection against accidents in industrial work space,...". The term "walkway" denotes any place in which persons walk or stay and in which it is relevant to use an elongated support board. This includes gangways, stairways, landings, floors, platforms or decks.

In some situations, it is necessary to arrange lighting at walkways. A non-limiting example is external gangways in industrial facilities in which other lighting does not provide sufficient illumination to safeguard traffic or work on or from the walkway. Another example may be external stairways on buildings.

It is known to arrange individual brackets for lighting fixtures on or at railings to fix necessary lighting. It is also known to arrange cable racks on a railing or wall near the support board.

Individual brackets for lighting fixtures constitute a considerable extra cost in this connection and may also be aesthetically unfortunate.

KR 100979675 B1 discloses a LED illumination rail, wherein a mounting rail groove is formed in the lower surface of a handrail. LED modules are attached with bolts extending through the LED modules and into the plane mounting surface forming the bottom of the groove. Side portion protrusions of a cover is engaging with side grooves of the LED modules to fix the cover in the handrail. There is no teaching of pre-fitting LED modules on rails arranged to be connected to the handrail where needed.

US 4161769 A discloses a combined hand rail and lighting fixture for a walkway, such as a stair flight, characterized by a tubular member with spaced openings in a lower portion of its wall in which are disposed lighting fixtures, each comprising an extruded housing, a reflector for supporting an illuminating bulb, and an extruded arcuate window closing an opening, the housing and reflector forming a space for receiving the requisite electrical conductors. The lighting fixture is attached inside the tubular member by means of nuts or threaded pins welded to the internal top portion of the tubular member. The wirings are extending within the tubular member to an adjacent post and further on to a junction box provided at the walkway.

US 4858087 A discloses a fluorescent lighting enclosure system, for example, a handrail, which is designed to receive standard fluorescent strip lights of one or multiple lamp configuration and to support and enclose the fixtures in a readily adaptable form. The enclosure is in the form of continuous extrusions having internal tracks extending longitudinally along the full length of the extrusion. A spline is designed to fit in the tracks and act as a mount for the enclosure itself and for the fluorescent strips as well as to join the ends of enclosure sections and hold an end plate in place. The splines are slidable inside the track and are provided with setscrews arranged for engagement with the inner wall of the extrusion. The lamps are attached to the splines by machine screws captured in the splines and extending out of the tracks.

From JP 2002061360 A is known a luminescent display of a handrail. A slit is provided along the longitudinal direction on the hollow structured handrail, and a luminescent display member is fitted in a stepped part of the slit. A fitting foot member furnished with an engagement part is provided on the inside of the luminescent display member, and when the display member is fitted in the slit, it is engaged and fixed by its springing force. A luminescent layer made of luminous pigment, etc., is formed on the inside of a translucent display surface of the luminescent member by coating, etc.

The invention has for its object to remedy or reduce at least one of the drawbacks of the prior art or at least provide a useful alternative to the prior art.

The object is achieved through the features, which are specified in the description below and in the claims that follow.

Walkways of the kind in question here are typically provided with a handrail. In the case of a railing, there is usually also at least one knee rail. The handrail and the knee rail have been given the collective name of support board.

By providing the support board with an elongated lighting-fixture rail which is suitable for carrying lighting fixtures and which may also constitute a necessary cable rack, the installation work directed towards lighting may be considerably simplified while, at the same time, the appearance is improved.

The invention is defined by the independent claim. The dependent claims define advantageous embodiments of the invention.

The invention relates more specifically to an elongated support board forming a handrail, a knee rail or the like in a railing alongside a walkway, characterized by the elongated support board comprises a lighting-fixture rail extending in a longitudinal direction for the support board and configured to support lighting fixture, and, in areas without lighting fixtures, a closing accessory, wherein the lighting-fixture rail and the closing accessory constitute additions to the support board and is held fixed in the support board by snap connections, and wherein snap connecting elements extends from the lighting-fixture rail and the closing accessory and mesh with connecting portions providing ledges inside the support board.

The support board forms a support for persons and does not include mere cable racks often extending along a railing, for example.

At least one of the elongated support board and the lighting-fixture rail may be formed of a extruded profile. Extrusion is an efficient production method for producing relatively complicated profiles, especially in light metal, such as aluminium.

The elongated support board according to the invention solves a long-felt problem in a reasonable and aesthetically superior way.

In what follows, examples of preferred embodiments are described, which are visualized in the accompanying drawings, in which:
- Figure 1: shows a section of a walkway with a railing, the handrail of the railing being formed in accordance with the invention;
- Figure 2: shows a cross section of a handrail according to prior art on a larger scale;
- Figure 3: shows a section I-I of the handrail of figure 1 provided with a lighting-fixture rail;
- Figure 4: shows a section of a handrail in an alternative embodiment; and
- Figure 5: shows a closing accessory for an area of the handrail of figure 4n without a lighting fixture.

In the drawings, the reference numeral 1 indicates a walkway with a railing 2 which is attached to the walkway 1 here. The railing 2 includes vertical support posts 4 and a number of elongated support boards 6 in the form of a handrail 8 and several knee rails 10. The railing 2 also includes a toe board 12.

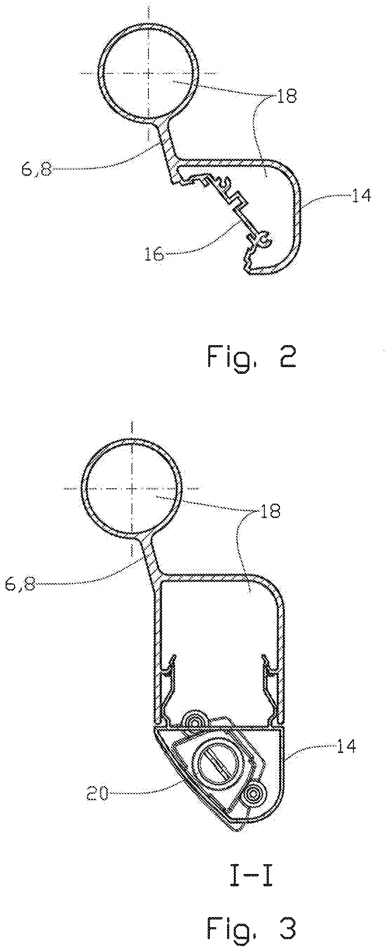

Figure 2 shows an elongated support board 6 in the form of a handrail 8 which is made with a lighting-fixture rail 14 according to prior art extending in the longitudinal direction. The lighting-fixture rail 14, which, in this exemplary embodiment, is made as part of the support board 6, is provided with lighting-fixture brackets 16. The cavities 18 formed may be used for carrying cables, for example.

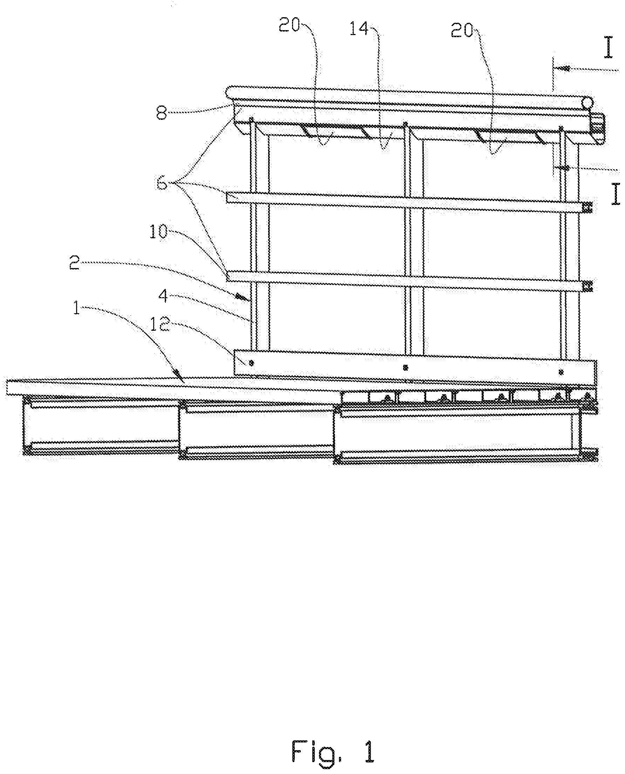

Figure 3 shows a section I-I of figure 1. Here, the support board 6 is made as an extruded profile and the lighting-fixture rail 14 as a profile extruded separately and complementarily suitable for "clicking" into the support board 6, that is to say being held fixed by snap connections. Here, the lighting-fixture rail 14 constitutes an addition to the support board 6. Snap connecting elements 14a extends from the lighting-fixture rail 14 and mesh with connecting portions 6a providing ledges 6b inside the support board 6.

A number of lighting fixtures 20 are arranged along the support board 6. The lighting fixture 20 is shown here as recessed into the lighting-fixture rail 14 and may be designed to be "clicked" into the lighting-fixture rail 14 by means of fastening means not shown.

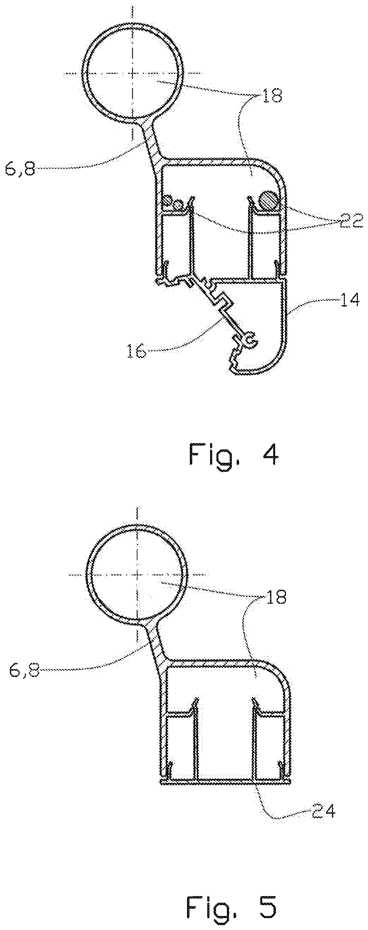

In an alternative embodiment, see figure 4, in which the lighting-fixture rail1 4 is formed as a separate profile to be attached to the support board 6, cables 22 that are carried in one of the cavities 18 of the support board 6 are shown.

Figure 5 shows the support board 6 in which a closing accessory 24 is arranged, for use in areas where lighting fixtures 20 are not needed. Like with the lighting-fixture rail 14, snap connecting elements 24a extends from the closing accessory 24 and are arranged for meshing with the connecting portions 6a providing the ledges 6b inside the support board 6.

The use of the verb "to comprise" and its different forms does not exclude the presence of elements or steps that are not mentioned in the claims. The indefinite article "a" or "an" before an element does not exclude the presence of several such elements.

The fact that some features are indicated in mutually different dependent claims does not indicate that a combination of these features cannot be used with advantage.

## Claims

1. An elongated support board (6) forming a handrail (8), a knee rail (10) or the like in a railing (2) alongside a walkway (1),, **characterized** i n that the elongated support board (6) comprises a lighting-fixture rail (14) extending in a longitudinal direction of the support board (6) and configured to support a lighting fixture (20), and, in areas without lighting fixtures (20), a closing accessory (24), wherein the lighting-fixture rail (14) and the closing accessory (24) constitute additions to the support board (6) and are held fixed in the support board (6) by snap connections, and wherein snap connecting elements (14a, 24a) extend from the lighting-fixture rail (14) and the closing accessory (24) and mesh with connecting portions (6a) providing ledges (6b) inside the support board (6).

2. The elongated support board (6) according to claim 1, wherein at least one of the support board (6) or the lighting-fixture rail (14) constitutes an extruded profile.

## Patentansprüche

1. Längliches Stützbrett (6), welches eine Handleiste (8), eine Knieleiste (10) oder ähnliches in einem Geländer (2) entlang einem Gehweg (1) bildet, **dadurch gekennzeichnet, dass** das längliche Stützbrett (6) eine Beleuchtungsvorrichtungsleiste (14) aufweist, welche sich in einer Längsrichtung des Stützbrettes (6) erstreckt und ausgebildet ist, eine Beleuchtungsvorrichtung (20) zu tragen, und, in Bereichen ohne Beleuchtungsvorrichtungen (20), ein Schliess-Zusatzteil (24), wobei die Beleuchtungsvorrichtungsleiste (14) und das Schliess-Zusatzteil (24) Zubehör zum Stützbrett (6) darstellen und durch Schnappverbindungen im Stützbrett (6) befestigt gehalten werden, und wobei Schnappverbindungselemente (14a, 24a) sich von der Beleuchtungsvorrichtungsleiste (14) und vom Schliess-Zusatzteil (24) her erstrecken und im Eingriff stehen mit Verbindungsabschnitten (6a) welche Absätze (6b) innerhalb des Stützbrettes (6) zur Verfügung stellen.

2. Längliches Stützbrett (6) gemäss Anspruch 1, wobei mindestens eins ausgewählt von dem Stützbrett (6) oder von der Beleuchtungsvorrichtungsleiste (14) ein extrudiertes Profil aufweist.

## Revendications

1. Un panneau de support allongé (6) formant une main courante (8), rail de genou (10) ou analogue, dans un garde-corps (2) le long d'une passerelle (1), **caractérisé en ce que** ledit panneau de support allongé (6) comprend un rail de fixation d'appareil d'éclairage (14) s'étendant dans la direction longitudinale du panneau de support (6) et configuré pour supporter une fixation d'un appareil d'éclairage (20), et, dans des domaines sans fixation d'appareil d'éclairage (20), un accessoire de fermeture (24), dans lequel le rail de fixation d'appareil d'éclairage (14) et l'accessoire de fermeture (24) constituent des additions au panneau de support (6) et sont maintenus fixés dans le panneau de support (6) par des connexions d'encliquetage, et dans lequel des éléments de connexion d'encliquetage (14a, 24a) s'étendent depuis le rail de fixation d'appareil d'éclairage (14) et l'accessoire de fermeture (24) et maillent avec des parties de connexion (6a) fournissant des corniches (6b) à l'intérieur des panneaux de support (6).

2. Le panneau de support allongé (6) selon la revendication 1, dans lequel au moins l'un parmi le panneau de support (6) ou le rail de fixation d'appareil d'éclairage (16) constitue un profil extrudé.
